(19) **Europäisches Patentamt / European Patent Office / Office européen des brevets**

(11) **EP 3 663 081 B1**

(12) **FASCICULE DE BREVET EUROPEEN**

(45) Date de publication et mention de la délivrance du brevet:
**26.05.2021 Bulletin 2021/21**

(21) Numéro de dépôt: **19213044.1**

(22) Date de dépôt: **03.12.2019**

(51) Int Cl.:
*B32B 1/08* $^{(2006.01)}$  *B32B 27/08* $^{(2006.01)}$
*B32B 27/28* $^{(2006.01)}$  *B32B 27/30* $^{(2006.01)}$
*B32B 27/32* $^{(2006.01)}$  *B32B 27/18* $^{(2006.01)}$
*B32B 27/22* $^{(2006.01)}$  *F16L 11/04* $^{(2006.01)}$
*B32B 27/34* $^{(2006.01)}$

(54) **STRUCTURE TUBULAIRE MULTICOUCHE DESTINEE AU TRANSPORT D'UN FLUIDE DE CLIMATISATION**

MEHRSCHICHTIGE SCHLAUCHSTRUKTUR FÜR DEN TRANSPORT EINES KLIMATISIERUNGSFLUIDS

MULTILAYER TUBULAR STRUCTURE INTENDED FOR TRANSPORTING AN AIR-CONDITIONING FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2018 FR 1872292**

(43) Date de publication de la demande:
**10.06.2020 Bulletin 2020/24**

(73) Titulaire: **ARKEMA FRANCE**
**92700 Colombes (FR)**

(72) Inventeurs:
• **MONTANARI, Thibaut**
  **27470 SERQUIGNY (FR)**
• **DUFAURE, Nicolas**
  **27470 SERQUIGNY (FR)**
• **GEORGEL, Marie**
  **27470 SERQUIGNY (FR)**

(56) Documents cités:
**WO-A1-2017/121961**

**Description**

La présente invention concerne une structure tubulaire multicouche comportant au moins une couche interne à base de polyamide aliphatique et au moins une couche externe à base de polyamide aliphatique. L'invention concerne également l'utilisation de cette structure pour le transport de fluide de transfert de chaleur, en particulier de fluide frigorigène choisi parmi les composés hydrocarbures, hydrofluorocarbures, éthers, hydrofluoroéthers, $CO_2$, $NH_3$, $SO_2$ et fluorooléfines, notamment le R134, R-1234yf ou R-1234ze, en particulier le R-1234yf ou R-1234ze dans le domaine de la climatisation automobile.

Les structures tubulaires pour le transport de fluide de transfert de chaleur dans le domaine de la climatisation automobile nécessitent deux propriétés antagonistes qui sont respectivement la perméabilité à l'eau et l'éclatement à chaud (125°C) qui doit être supérieur à 83bars.

Ainsi les polyamides à longue chaîne permettent de respecter la première propriété qui rend donc inadaptée l'utilisation de polyamides à courte chaîne pour cette première propriété.

Néanmoins, ces même polyamides à courte chaîne permettent la résistance à l'éclatement à chaud ce qui rend donc inadaptée l'utilisation de polyamides à longue chaîne pour cette seconde propriété.

Par ailleurs, la directive européenne F-Gas programme un retrait progressif du marché des gaz frigorigènes à fort pouvoir de réchauffement planétaire, exprimé en PRP (ou GWP de l'anglais Global Warning Potential). De 100% en 2015, la quantité de fluides frigorigènes hydrofluorocarbures (HFC) à indice PRP élevé doit passer à 63% entre 2018 et 2020 avant d'atteindre les 21% en 2030.

Depuis janvier 2017, les véhicules automobiles neufs commercialisés en Europe doivent être équipés en première monte de climatisation fonctionnant au R1234yf.

Cette norme n'est cependant pour le moment valable qu'au niveau européen mais devrait à court terme être étendue à d'autres zones géographiques telles que les USA.

Les éléments de circuits de climatisation et notamment les structures tubulaires multicouches) doivent également :

- être étanches aux fluides transportés et donc présenter des propriétés barrières vis-à-vis de ces fluides (et en particulier aux composés frigorigènes fluorocarbonés tels que le R134, R-1234yf ou R-1234ze), ainsi qu'à l'eau et à l'oxygène. Le terme propriétés barrières signifie que la structure est quasi imperméable au fluides des lignes de climatisation automobile et ne permet donc quasiment pas l'émission des fluides de ligne de climatisation dans l'atmosphère.
- présenter une résistance chimique aux fluides transportés, ainsi qu'aux huiles des compresseurs, à l'eau et à l'oxygène, afin d'éviter une dégradation excessive sur le long terme ;
- non seulement présenter une résistance mécanique suffisante (en particulier résistance à l'éclatement) mais aussi une flexibilité suffisante dans le cas où les deux extrémités du tube sont liées à des pièces pouvant bouger l'une par rapport à l'autre (en particulier dans la climatisation automobile, où les contraintes d'encombrement et de montage sous le capot imposent de plier les structures tubulaires) et permettre l'amortissement de vibrations ;
- présenter une résistance thermique satisfaisante, compte tenu du fait que les fluides transportés peuvent être à une température élevée, et que la température de l'environnement peut également être élevée (en particulier dans la climatisation automobile, les pièces concernées pouvant être disposées au voisinage du moteur) et notamment au $ZnCl_2$.

Les structures décrites jusqu'à présent dans l'art antérieur pour le transport de fluides sont surtout destinées au transport d'essence et beaucoup plus rarement au transport de fluide de climatisation tel qu'un fluide frigorigène.

Ainsi, le brevet EP2098580 décrit des structures destinées au transfert ou au stockage d'un fluide, comprenant au moins deux couches, l'une des deux couches étant constituée d'une composition adhésive, à savoir un mélange de polyamide longue chaîne, moyenne chaîne et courte chaîne. Ces structures sont plus particulièrement destinées au transport d'essence.

Le brevet EP2098365 décrit des structures multicouches comprenant au moins deux couches, l'une comprenant au moins un polymère et ne comprenant pas de cuivre, et l'autre comprenant au moins un polymère et au moins un stabilisant à base de cuivre pour le transport ou le stockage de fluides. Le polymère utilisé dans les deux couches est un polyamide longue chaîne. Ces structures sont plus particulièrement destinées au transport de carburant, notamment de biodiesel.

La demande internationale WO 2014/114766 décrit une structure comprenant au moins deux couches, l'une des deux couches étant constituée d'une composition adhésive comprenant majoritairement un ou deux polyamides choisis parmi les polyamides à longue chaîne, les polyamides à chaîne moyenne, les polyamides à courte chaîne.

Ces structures sont plus particulièrement destinées au transport d'essence, notamment d'essences alcoolisées.

La demande internationale WO 2017/121961 décrit des structures tubulaires multicouche (MLT) comprenant de l'extérieur vers l'intérieur au moins une couche barrière (1) en EVOH ou en PPA et au moins une couche intérieure (2) situé au-dessous de la couche barrière et constituée d'un polyamide de type aliphatique choisi parmi un polyamide à chaîne courte, moyenne ou longue.

Ces structures sont destinées au transport de carburants, en particulier d'essence, notamment alcoolisée.

A l'heure actuelle, les tubulures pour le transport de fluides frigorigènes dans la climatisation automobile comprennent des portions métalliques rigides (généralement en aluminium) et des portions flexibles en tubes multicouches. Certains de ces tubes multicouches sont connus sous le nom anglais de tubes « *veneers* » ; ils comportent successivement, de l'extérieur vers l'intérieur, une première couche d'élastomère de type caoutchouc, une tresse de renfort, une deuxième couche d'élastomère de type caoutchouc et une couche interne à base de polyamide.

D'autres structures tubulaires pour le transport de fluides frigorigènes dans la climatisation automobile autres que les tubes « *veneer* » ont récemment été décrites.

Ainsi, la demande internationale WO 2014/125219 décrit une structure thermoplastique comprenant au moins une couche constituée d'une composition comprenant un copolyamide de formule X/10.T/Y, notamment pour la climatisation automobile. La proportion de motifs X étant de 0,4 à 0,8 mole pour une mole de motifs semi-aromatiques 10.T et Y.

La demande internationale WO 2017/103466 décrit des structures pour le transport de fluide de transfert de chaleur, en particulier de fluide frigorigène tel que le R134, R-1234yf ou R-1234ze, en particulier dans le domaine de la climatisation automobile.

Ces structures comprennent une couche en contact avec le fluide comprenant au moins un polymère $P_1$ thermoplastique semi-cristallin et une couche comprenant au moins un polymère $P_2$ thermoplastique semi-cristallin et des fibres continues.

Le polyamide P1 est notamment un copolymère d'éthylène et d'alcool vinylique (EVOH) ou un polyamide semi-aromatique ou à courte chaîne.

Le polyamide P2 est notamment un polyamide semi-aromatique ou un polyamide à chaîne courte ou longue.

Néanmoins, la présence de fibres continues dans ces structures nécessite leur extrusion en plusieurs étapes.

Les structures tubulaires de l'art antérieur ainsi que les structures aluminium/caoutchouc ne permettent pas de répondre à tous les critères ci-dessus définis et notamment à la combinaison des deux premières propriétés ci-dessus définies.

Il existe donc une nécessité de mettre au point des structures tubulaires pour le transport de fluide de transfert en particulier de fluide frigorigène tel que le R-1234yf ou le R-1234ze qui permettent de satisfaire le cahier des charges ci-dessus défini.

La présente invention concerne donc une structure tubulaire multicouche (MLT) destinée au transport d'un fluide de transfert de chaleur,

ladite structure tubulaire multicouche comprenant :

au moins une couche (1) comprenant une composition (1) comprenant majoritairement au moins un polyamide à longue chaine présentant de 10 à 15 atomes de carbone par atome d'azote et comprenant au moins 50% de motifs aliphatiques par rapport à la somme des motifs présents dans ledit polyamide à longue chaine,

au moins une couche (2) située au-dessous de la dite couche (1) comprenant une composition (2) comprenant majoritairement au moins un polyamide présentant de 4 à 9 atomes de carbone par atome d'azote, ledit polyamide comprenant au moins 50% de motifs aliphatiques par rapport à la somme des motifs présents dans ledit polyamide, ladite composition (2) comprenant jusqu'à 12% de polyoléfines, notamment jusqu'à 6% en poids de polyoléfine, par rapport au poids total de ladite composition (2), et jusqu'à 2% en poids d'au moins un plastifiant par rapport au poids total de ladite composition (2),

optionnellement une couche (3) comprenant une composition (3) telle que définie pour la composition (1), ou comprenant une composition (3') comprenant majoritairement un polyamide à chaîne courte présentant de 4 à 7 atomes de carbone par atome d'azote et au moins 20%, préférentiellement au moins 25% en poids d'au moins une polyoléfine par rapport au poids total de ladite composition (3'), ou une composition (4) comprenant un polyamide comprenant au moins 50% de motifs semi aromatiques,

ladite couche (1) étant dépourvue de fibres continues,
ladite couche (2) étant en contact avec ledit fluide transporté lorsque ladite couche (3) n'est pas présente,
et ladite ou lesdites couche(s) (2) représentant au moins 50% de l'épaisseur totale du tube.

Les Inventeurs ont donc trouvé de manière inattendue qu'une structure tubulaire comprenant au moins une couche (1) comprenant majoritairement au moins un polyamide à longue chaine présentant de 10 à 15 atomes de carbone par atome d'azote et au moins une couche (2) située au-dessous de la dite couche (1) et comprenant majoritairement au moins un polyamide présentant de 4 à 9 atomes de carbone par atome d'azote permettait de satisfaire le cahier des charges ci-dessus défini.

**S'agissant de la couche (1) et de la composition (1):**

L'expression « dépourvue de fibres continues » signifie que la couche (1) ne comprend pas de fibres continues, qu'il s'agisse de fibres minérales, de fibres polymériques ou de polymère, ou de mélanges des fibres précitées.

L'expression « fibres continues » se réfère à des matériaux fibreux continus (notamment fibre de verre ou fibre de carbone).

Cela signifie que la composition (1) comprenant au moins un polyamide à longue chaîne en C10 à C15 est dépourvue de fibres continues mais peut comprendre des fibres courtes ou longues.

Avantageusement, ladite couche (1) est dépourvue de fibres. Lesdites fibres désignent des fibres courtes, longues ou continues. Cela signifie que la composition (1), dans ce mode de réalisation, comprenant au moins un polyamide à longue chaîne en C10 à C15 est non seulement dépourvue de fibres continues mais également dépourvue de fibres courtes et longues.

L'expression « comprenant majoritairement au moins un polyamide.. » signifie que le ou les polyamides est(sont) présent(s) dans la composition (1) en proportion en poids supérieure à 50% par rapport au poids total de la composition.

Le terme polyamide désigne aussi bien un homopolyamide qu'un copolyamide.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

L'homopolyamide peut être obtenu à partir de la polycondensation de motifs lactames, de motifs aminoacides ou de motifs XY, X étant une diamine et Y un acide dicarboxylique (ou diacide), à partir du moment où l'homopolyamide présente de 10 à 15 atomes de carbone par atome d'azote.

La diamine peut être aliphatique linéaire ou ramifiée, ou cycloaliphatique, préférentiellement elle est aliphatique linéaire ou ramifiée, notamment linéaire.

L'acide dicarboxylique peut être aliphatique ou cycloaliphatique, préférentiellement il est aliphatique.

Par conséquent, les lactames et les aminoacides utilisés pour obtenir les homopolyamides doivent présenter un nombre moyen d'atomes de carbone (C) par atome d'azote (N) compris de 10 à 15.

Avantageusement, les lactames et les aminoacides sont en C11 et C12.

Dans le cas des homopolyamides obtenus à partir de la polycondensation de motifs XY, le nombre d'atome par atome d'azote se calcule par la moyenne des nombres d'atomes de carbone présents dans le motif issu de la diamine X et dans le motif issu du diacide Y.

Par conséquent, la diamine (X) peut être en C4 à C36, notamment C6 à C18, en particulier en C4 à C12 et l'acide dicarboxylique (Y) en C4 à C36, notamment en C6 à C18, en particulier en C6 à C12, à partir du moment où la moyenne des nombres d'atomes de carbone présents dans le motif issu de la diamine X et dans le motif issu du diacide Y est comprise de 10 à 15.

Avantageusement, la diamine est choisie parmi la 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine, la 1,13-tridécanediamine, la 1,14-tétradécanediamine, la 1,16-hexadécanediamine et la 1,18-octadécanediamine.

Avantageusement, la diamine est choisie parmi la 1,10-décanediamine et la 1,12-dodécanediamine.

Avantageusement, le diacide carboxylique est choisi parmi l'acide sébacique et l'acide dodécanedioïque.

Avantageusement, la diamine est choisie parmi la 1,10-décanediamine et la 1,12-dodécanediamine et le diacide carboxylique est choisi parmi l'acide sébacique, l'acide undécanedioïque et l'acide dodécanedioïque.

Dans le cas des copolyamides, le nombre d'atomes de carbone par atome d'azote se calcule selon le même principe que pour un homopolyamide. Le calcul est réalisé au prorata molaire des différents motifs amides.

Par conséquent, les lactames et les aminoacides utilisés pour obtenir les copolyamides peuvent présenter un nombre moyen d'atomes de carbone (C) par atome d'azote (N) compris inférieur à 10, et notamment être compris de 6 à 15.

Les diamines X et diacides Y utilisés dans les copolyamides peuvent être des diamines et/ou diacides aromatiques à partir du moment où ledit polyamide de la composition (1) comprend au moins 50% de motifs aliphatiques par rapport à la somme des motifs présents dans ledit polyamide.

Dans un mode de réalisation, ledit au moins un polyamide de la composition (1) comprend au moins 60% de motifs aliphatiques par rapport à la somme des motifs présents dans ledit polyamide.

Dans un autre mode de réalisation, ledit au moins un polyamide de la composition (1) comprend au moins 70% de motifs aliphatiques par rapport à la somme des motifs présents dans ledit polyamide.

Dans un autre mode de réalisation, ledit au moins un polyamide de la composition (1) comprend au moins 80% de motifs aliphatiques par rapport à la somme des motifs présents dans ledit polyamide.

Dans un autre mode de réalisation, ledit au moins un polyamide de la composition (1) comprend au moins 90% de motifs aliphatiques par rapport à la somme des motifs présents dans ledit polyamide.

Dans un autre mode de réalisation, ledit au moins un polyamide de la composition (1) comprend 100% de motifs aliphatiques par rapport à la somme des motifs présents dans ledit polyamide. Ledit au moins un polyamide de la composition (1) est donc constitué uniquement de motifs aliphatiques.

Dans un mode de réalisation, ladite composition (1) comprend majoritairement un seul polyamide et donc ledit seul polyamide est présent dans la composition en proportion en poids supérieure à 50% par rapport au poids total de la composition.

Dans un mode de réalisation, ledit polyamide de la composition (1) comprend au moins 60% de motifs aliphatiques par rapport à la somme des motifs présents dans ledit polyamide.

Dans un autre mode de réalisation, ledit polyamide de la composition (1) comprend au moins 70% de motifs aliphatiques par rapport à la somme des motifs présents dans ledit polyamide.

Dans un autre mode de réalisation, ledit polyamide de la composition (1) comprend au moins 80% de motifs aliphatiques par rapport à la somme des motifs présents dans ledit polyamide.

Dans un autre mode de réalisation, ledit polyamide de la composition (1) comprend au moins 90% de motifs aliphatiques par rapport à la somme des motifs présents dans ledit polyamide.

Dans un autre mode de réalisation, ledit polyamide de la composition (1) comprend 100% de motifs aliphatiques par rapport à la somme des motifs présents dans ledit polyamide. Ledit polyamide de la composition (1) est donc constitué uniquement de motifs aliphatiques.

Dans un mode de réalisation, ladite couche (1) est constituée d'une composition (1) comprenant majoritairement au moins un polyamide à longue chaine présentant de 10 à 15 atomes de carbone par atome d'azote et comprenant au moins 50% de motifs aliphatiques par rapport à la somme des motifs présents dans ledit polyamide à longue chaine.

Dans un mode de réalisation, ledit au moins un polyamide de la composition (1) comprend au moins 60% de motifs aliphatiques par rapport à la somme des motifs présents dans ledit polyamide.

Dans un autre mode de réalisation, ledit au moins un polyamide de la composition (1) comprend au moins 70% de motifs aliphatiques par rapport à la somme des motifs présents dans ledit polyamide.

Dans un autre mode de réalisation, ledit au moins un polyamide de la composition (1) comprend au moins 80% de motifs aliphatiques par rapport à la somme des motifs présents dans ledit polyamide.

Dans un autre mode de réalisation, ledit au moins un polyamide de la composition (1) comprend au moins 90% de motifs aliphatiques par rapport à la somme des motifs présents dans ledit polyamide.

Dans un autre mode de réalisation, ledit au moins un polyamide de la composition (1) comprend 100% de motifs aliphatiques par rapport à la somme des motifs présents dans ledit polyamide. Ledit polyamide est donc constitué uniquement de motifs aliphatiques.

Dans un mode de réalisation, ladite couche (1) est constituée d'une composition (1) comprenant majoritairement un seul polyamide et donc ledit seul polyamide est présent dans la composition en proportion en poids supérieure à 50% par rapport au poids total de la composition.

Dans un mode de réalisation, ledit polyamide de la composition (1) comprend au moins 60% de motifs aliphatiques par rapport à la somme des motifs présents dans ledit polyamide.

Dans un autre mode de réalisation, ledit polyamide de la composition (1) comprend au moins 70% de motifs aliphatiques par rapport à la somme des motifs présents dans ledit polyamide.

Dans un autre mode de réalisation, ledit polyamide de la composition (1) comprend au moins 80% de motifs aliphatiques par rapport à la somme des motifs présents dans ledit polyamide.

Dans un autre mode de réalisation, ledit polyamide de la composition (1) comprend au moins 90% de motifs aliphatiques par rapport à la somme des motifs présents dans ledit polyamide.

Dans un autre mode de réalisation, ledit polyamide de la composition (1) comprend 100% de motifs aliphatiques par rapport à la somme des motifs présents dans ledit polyamide. Ledit polyamide de la composition (1) est donc constitué uniquement de motifs aliphatiques.

Avantageusement, dans tous les modes de réalisation ci-dessus définis pour la composition (1) de la couche (1), le lactame est choisi parmi le lauryllactame, l'aminoacide est choisi parmi l'acide aminoundécanoïque, la diamine est choisie parmi la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine et le diacide carboxylique est choisi parmi l'acide subérique, l'acide azélaïque, l'acide sébacique, l'acide undécanedioïque, l'acide dodécanedioïque, l'acide brassylique, l'acide tétradécanedioïque.

Plus avantageusement, le lactame est le lauryllactame, l'aminoacide est l'acide aminoundécanoïque, la diamine est choisie parmi la 1,10-décanediamine et la 1,12-dodécanediamine et le diacide carboxylique est choisi parmi l'acide sébacique et l'acide dodécanedioïque.

Ladite composition (1) peut également comprendre au moins une polyoléfine.

Ladite composition (1) peut donc comprendre, outre ledit au moins un polyamide, au moins une polyoléfine.

Avantageusement, ladite composition (1) comprend jusqu'à 30% d'au une moins polyoléfine.

La polyoléfine peut être fonctionnalisée ou non fonctionnalisée ou être un mélange d'au moins une fonctionnalisée et/ou d'au moins une non fonctionnalisée. Pour simplifier on a désigné la polyoléfine par (B) et on a décrit ci-dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène.
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle;
- des copolymères éthylène et acétate de vinyle (EVA) et (méth)acrylate d'alkyle, contenant jusqu'à 40% en poids de comonomères.

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique ou méthacrylate de glycidyle ;

- les copolymères éthylène/acétate de vinyle/anhydride maléique ou méthacrylate de glycidyle;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans une large mesure, ce que l'homme de l'art appréciera. MFI, abréviation de Melt Flow Index, est l'indice de fluidité à l'état fondu. On le mesure selon la norme ASTM 1238. Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tous polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Avantageusement, la polyoléfine est un modifiant choc. Le modifiant choc est avantageusement constitué par un polymère présentant un module de flexion inférieur à 100 MPa mesuré selon la norme ISO 178 : 2010, déterminé à 23°C avec une humidité relative : RH50%, et de Tg inférieure à 0°C (mesurée selon la norme 11357-2 :2013 au niveau du point d'inflexion du thermogramme DSC).

Avantageusement, ladite composition (1) comprend jusqu'à 40% d'au moins une polyoléfine.

Avantageusement, ladite composition (1) comprend au moins 3% en poids d'au moins une polyoléfine, en particulier au moins 6% en poids d'au moins une polyoléfine, en particulier de 6 à 20% en poids, notamment de 10 à 12% en poids d'au moins une polyoléfine, par rapport au poids total de ladite composition (1).

Ladite composition (1) peut également comprendre au moins un plastifiant.

Ladite composition (1) peut donc comprendre, outre ledit au moins un polyamide, au moins un plastifiant.

A titre d'exemple, les plastifiants sont choisis parmi les dérivés de benzène sulfonamide, tels que le n-butyl benzène sulfonamide (BBSA) ; l'éthyl toluène sulfonamide ou le N-cyclohexyl toluène sulfonamide ; les esters d'acides hydroxy-benzoïques, tels que le parahydroxybenzoate d'éthyl-2-hexyle et le parahydroxybenzoate de décyl-2-hexyle ; les esters ou éthers du tétrahydrofurfuryl alcool, comme l'oligoéthylèneoxytétrahydrofurfurylalcool; et les esters de l'acide citrique ou de l'acide hydroxy-malonique, tel que l'oligoéthylèneoxy malonate.

On ne sortirait pas du cadre de l'invention en utilisant un mélange de plastifiants.

Avantageusement, ladite composition (1) comprend jusqu'à 13% en poids d'au moins un plastifiant par rapport au poids de la dite composition (1).

Ladite composition (1) peut également comprendre un additif.

Les additifs optionnellement utilisés dans les compositions de l'invention sont les additifs classiques utilisés dans les polyamides et bien connus de l'homme du métier et sont notamment décrits dans EP 2098580.

Par exemple, ils comprennent une charge antistatique choisie parmi le noir de carbone, le graphite, des fibres de carbone, des nanotubes de carbone, en particulier noir de carbone et nanotubes de carbone, un antioxydant, un stabilisant à la chaleur, un absorbeur d'UV, un stabilisant à la lumière, un lubrifiant, une charge inorganique, un agent ignifugeant, un agent nucléant et un colorant, des fibres de renfort, une cire et leurs mélanges.

A titre d'exemple, le stabilisant peut être un stabilisant UV, un stabilisant organique ou plus généralement une combinaison de stabilisants organiques, tel un antioxydant de type phénol (par exemple du type de celle de l'irganox® 245 ou 1098 ou 1010 de la société Ciba-BASF), un antioxydant de type phosphite (par exemple l'irgafos® 126 et l'irgafos® 168 de la société Ciba-BASF) et voire éventuellement d'autres stabilisants comme un HALS, ce qui signifie Hindered Amine Light Stabiliser ou stabilisant lumière de type amine encombrée (par exemple le Tinuvin® 770 de la société Ciba-BASF), un anti-UV (par exemple le Tinuvin® 312 de la société Ciba) ou un stabilisant à base de phosphore. On peut également utiliser des antioxydants de type amine tel le Naugard® 445 de la société Crompton ou encore des stabilisants polyfonctionnels tel le Nylostab® S-EED de la société Clariant.

Ce stabilisant peut également être un stabilisant minéral, tel qu'un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

Dans un mode de réalisation, ladite composition (1) comprend en poids :

- 55% à 100% d'au moins un polyamide à longue chaîne en C10 à C15 tel que défini ci-dessus;
- 0 à 30% d'au moins une polyoléfine ;
- 0 à 13% d'au moins un plastifiant ;
- 0 à 2% d'au moins un additif,

le total étant de 100% en poids.

Dans un autre mode de réalisation, ladite composition (1) comprend en poids :

- 55% à 97% d'au moins un polyamide à longue chaîne en C10 à C15 tel que défini ci-dessus;
- 3 à 30% d'au moins une polyoléfine;
- 0 à 13% d'au moins plastifiant ;
- 0 à 2% d'au moins un additif

le total étant de 100% en poids.

Dans un autre mode de réalisation, ladite composition (1) comprend en poids :

- 65% à 94% d'au moins un polyamide à longue chaîne en C10 à C15 tel que défini ci-dessus;
- 6 à 20% d'au moins une polyoléfine ;
- 0 à 13% d'au moins plastifiant ;
- 0 à 2% d'au moins un additif

le total étant de 100% en poids.

Avantageusement, ladite composition (1) est dépourvue de plastifiant et ladite composition (1) comprend en poids :

- 68% à 100% d'au moins un polyamide à longue chaîne en C10 à C15 tel que défini ci-dessus;
- 0 à 30% d'au moins une polyoléfine ;
- 0 à 2% d'au moins un additif,

le total étant de 100% en poids.

Plus avantageusement, ladite composition (1) comprend en poids :

- 68% à 97% d'au moins un polyamide à longue chaîne en C10 à C15 tel que défini ci-dessus;
- 3 à 30% d'au moins une polyoléfine;
- 0 à 2% d'au moins un additif

le total étant de 100% en poids.

Encore plus avantageusement, ladite composition (1) comprend en poids :

- 78% à 94% d'au moins un polyamide à longue chaîne en C10 à C15 tel que défini ci-dessus;
- 6 à 20% d'au moins une polyoléfine ;
- 0 à 2% d'au moins un additif

le total étant de 100% en poids.

Il est bien évident que les différentes compositions (1) comprenant ou non au moins une polyoléfine et/ou au moins un plastifiant et/ou au moins un additif se réfèrent à tous les modes de réalisation ci-dessus décrits.

Dans un mode de réalisation, ledit au moins un polyamide de la couche (1) de la structure tubulaire ci-dessus définie est choisi parmi le PA11, PA12, PA1010, PA1012, PA1210 et PA1212.

La couche (1) de la structure tubulaire ci-dessus définie peut être la couche la plus extérieure.

Avantageusement, ladite couche (1) de la structure tubulaire ci-dessus définie est la couche la plus extérieure de ladite structure.

Avantageusement, ladite structure (1) comprend une seule couche (1).

**S'agissant de la couche (2) et de la composition (2):**

L'expression « comprenant majoritairement au moins un polyamide.. » est telle que définie ci-dessus pour la couche (1).

Le terme polyamide désigne de la même manière aussi bien un homopolyamide qu'un copolyamide.

L'homopolyamide peut être obtenu à partir de la polycondensation de motifs lactames, de motifs aminoacides ou de motifs XY, X étant une diamine et Y un acide dicarboxylique (ou diacide), à partir du moment où l'homopolyamide présente de 4 à 9 atomes de carbone par atome d'azote.

La diamine peut être aliphatique linéaire ou ramifiée, ou cycloaliphatique, préférentiellement elle est aliphatique linéaire ou ramifiée, notamment linéaire.

L'acide dicarboxylique peut être aliphatique ou cycloaliphatique, préférentiellement il est aliphatique.

Par conséquent, les lactames et les aminoacides utilisés pour obtenir les homopolyamides doivent présenter un nombre moyen d'atomes de carbone (C) par atome d'azote (N) compris de 4 à 9.

Avantageusement, les lactames et les aminoacides sont en C6.

Dans le cas des homopolyamides obtenus à partir de la polycondensation de motifs XY, le nombre d'atome par atome d'azote se calcule par la moyenne des nombres d'atomes de carbone présents dans le motif issu de la diamine X et dans le motif issu du diacide Y.

Par conséquent, la diamine (X) peut être en C4 à C14, notamment C4 à C12, en particulier en C4 à C10 et l'acide dicarboxylique (Y) en C4 à C14, notamment en C4 à C12, en particulier en C4 à C10, à partir du moment où la moyenne des nombres d'atomes de carbone présents dans le motif issu de la diamine X et dans le motif issu du diacide Y est comprise de 4 à 9.

Avantageusement, la diamine est choisie parmi la butanediamine, la pentanediamine, 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine, la 1,13-tridécanediamine, la 1,14-tétradécanediamine, notamment la 1,6-hexaméthylènediamine.

Avantageusement, le diacide carboxylique est choisi parmi l'acide succinique, l'acide pentanedioïque, l'acide adipique, l'acide subérique, l'acide azélaïque, l'acide sébacique, l'acide undécanedioïque, l'acide dodécanedioïque, l'acide brassylique, l'acide tétradécanedioïque, notamment l'acide sébacique et l'acide dodécanedioïque.

Avantageusement, la diamine est choisie parmi la butanediamine, la pentanediamine, 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine, la 1,13-tridécanediamine, la 1,14-tétradécanediamine, notamment la 1,6-hexaméthylènediamine, et le diacide carboxylique est choisi parmi l'acide succinique, l'acide pentanedioïque, l'acide adipique, l'acide subérique, l'acide azélaïque, l'acide sébacique, l'acide undécanedioïque, l'acide dodécanedioïque, l'acide brassylique, l'acide tétradécanedioïque, notamment l'acide sébacique et l'acide dodécanedioïque.

Les diamines X et diacides Y utilisés dans les copolyamides peuvent être des diamines et/ou diacides aromatiques à partir du moment où ledit polyamide de la composition (2) comprend au moins 50% de motifs aliphatiques par rapport à la somme des motifs présents dans ledit polyamide.

Dans un mode de réalisation, ledit au moins un polyamide de la composition (2) comprend au moins 60% de motifs aliphatiques par rapport à la somme des motifs présents dans ledit polyamide.

Dans un autre mode de réalisation, ledit au moins un polyamide de la composition (2) comprend au moins 70% de motifs aliphatiques par rapport à la somme des motifs présents dans ledit polyamide.

Dans un autre mode de réalisation, ledit au moins un polyamide de la composition (2) comprend au moins 80% de motifs aliphatiques par rapport à la somme des motifs présents dans ledit polyamide.

Dans un autre mode de réalisation, ledit au moins un polyamide de la composition (2) comprend au moins 90% de motifs aliphatiques par rapport à la somme des motifs présents dans ledit polyamide.

Dans un autre mode de réalisation, ledit au moins un polyamide de la composition (2) comprend 100% de motifs aliphatiques par rapport à la somme des motifs présents dans ledit polyamide. Ledit au moins un polyamide est donc constitué uniquement de motifs aliphatiques.

Dans un mode de réalisation, ladite composition (2) comprend majoritairement un seul polyamide et donc ledit seul polyamide est présent dans la composition en proportion en poids supérieure à 50% par rapport au poids total de la composition.

Dans un mode de réalisation, ledit polyamide de la dite composition (2) comprend au moins 60% de motifs aliphatiques par rapport à la somme des motifs présents dans ledit polyamide.

Dans un autre mode de réalisation, ledit polyamide de la dite composition (2) comprend au moins 70% de motifs aliphatiques par rapport à la somme des motifs présents dans ledit polyamide.

Dans un autre mode de réalisation, ledit polyamide de la dite composition (2) comprend au moins 80% de motifs aliphatiques par rapport à la somme des motifs présents dans ledit polyamide.

Dans un autre mode de réalisation, ledit polyamide de la dite composition (2) comprend au moins 90% de motifs aliphatiques par rapport à la somme des motifs présents dans ledit polyamide.

Dans un autre mode de réalisation, ledit polyamide de la dite composition (2) comprend 100% de motifs aliphatiques par rapport à la somme des motifs présents dans ledit polyamide. Ledit polyamide de la dite composition (2) est donc constitué uniquement de motifs aliphatiques.

Dans un mode de réalisation, ladite couche (2) est constituée d'une composition (2) comprenant majoritairement au moins un polyamide à longue chaine présentant de 4 à 9 atomes de carbone par atome d'azote et comprenant au moins 50% de motifs aliphatiques par rapport à la somme des motifs présents dans ledit polyamide à longue chaine.

Dans un mode de réalisation, ledit au moins un polyamide de la dite composition (2) comprend au moins 60% de motifs aliphatiques par rapport à la somme des motifs présents dans ledit polyamide.

Dans un autre mode de réalisation, ledit au moins un polyamide de la dite composition (2) comprend au moins 70% de motifs aliphatiques par rapport à la somme des motifs présents dans ledit polyamide.

Dans un autre mode de réalisation, ledit au moins un polyamide de la dite composition (2) comprend au moins 80% de motifs aliphatiques par rapport à la somme des motifs présents dans ledit polyamide.

Dans un autre mode de réalisation, ledit au moins un polyamide de la dite composition (2) comprend au moins 90% de motifs aliphatiques par rapport à la somme des motifs présents dans ledit polyamide.

Dans un autre mode de réalisation, ledit au moins un polyamide de la dite composition (2) comprend 100% de motifs aliphatiques par rapport à la somme des motifs présents dans ledit polyamide. Ledit polyamide de la dite composition (2) est donc constitué uniquement de motifs aliphatiques.

Dans un mode de réalisation, ladite couche (2) est constituée d'une composition (2) comprenant majoritairement un seul polyamide et donc ledit seul polyamide est présent dans la composition en proportion en poids supérieure à 50% par rapport au poids total de la composition.

Dans un mode de réalisation, ledit polyamide de la dite composition (2) comprend au moins 60% de motifs aliphatiques par rapport à la somme des motifs présents dans ledit polyamide.

Dans un autre mode de réalisation, ledit polyamide de la dite composition (2) comprend au moins 70% de motifs aliphatiques par rapport à la somme des motifs présents dans ledit polyamide.

Dans un autre mode de réalisation, ledit polyamide de la dite composition (2) comprend au moins 80% de motifs aliphatiques par rapport à la somme des motifs présents dans ledit polyamide.

Dans un autre mode de réalisation, ledit polyamide de la dite composition (2) comprend au moins 90% de motifs aliphatiques par rapport à la somme des motifs présents dans ledit polyamide.

Dans un autre mode de réalisation, ledit polyamide de la dite composition (2) comprend 100% de motifs aliphatiques par rapport à la somme des motifs présents dans ledit polyamide. Ledit polyamide est donc constitué uniquement de motifs aliphatiques.

Avantageusement, dans tous les modes de réalisation ci-dessus définis pour la composition (2) de la couche (2), le lactame est le caprolactame, l'aminoacide est l'acide aminohéxanoïque, la diamine est choisie parmi la 2-méthyl-1,5-pentanediamine, la 1,6-hexaméthylènediamine, la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine et le diacide carboxylique est choisi parmi l'acide adipique, l'acide sébacique, l'acide undécanedioïque, l'acide dodécanedioïque, l'acide brassylique, l'acide tétradécanedioïque.

Plus avantageusement, le lactame est le caprolactame, l'aminoacide est l'acide aminohéxanoïque, la diamine est choisie parmi la 2-méthyl-1,5-pentanediamine, la 1,6-hexaméthylènediamine, la 1,10-décanediamine et la 1,12-dodécanediamine et le diacide carboxylique est choisi parmi l'acide adipique, l'acide sébacique et l'acide dodécanedioïque.

Dans un mode de réalisation, le lactame est le caprolactame, l'aminoacide est l'acide aminohéxanoïque, la diamine est choisie parmi la 2-méthyl-1,5-pentanediamine, la 1,6-hexaméthylènediamine, la 1,10-décanediamine et la 1,12-dodécanediamine et le diacide carboxylique est choisi parmi l'acide adipique, l'acide sébacique et l'acide dodécanedioïque.

Ladite composition (2) peut également comprendre au moins une polyoléfine en proportion en poids jusqu'à 12% par rapport au poids total de la composition, en particulier jusqu'à 6% par rapport au poids total de la composition.

La polyoléfine est telle que définie pour la composition (1).

Ladite composition (2) peut également comprendre au moins un plastifiant en proportion en poids jusqu'à 2% par rapport au poids total de la composition.

Le plastifiant est tel que défini pour la composition (1).

Ladite composition (2) peut également comprendre au moins un additif.

Dans un mode de réalisation, l'additif est en proportion en poids jusqu'à 2% par rapport au poids total de la composition.

L'additif est tel que défini pour la composition (1).

Dans un mode de réalisation, ladite composition (2) comprend en poids :

- 84% à 100%, notamment 90% à 100%, d'au moins un polyamide en C4 à C9 tel que défini ci-dessus;
- 0 à 12% d'au moins une polyoléfine, notamment de 0 à 6% d'au moins une polyoléfine ;
- 0 à 2% d'au moins un plastifiant ;
- 0 à 2% d'au moins un additif,

le total étant de 100% en poids.

Dans un autre mode de réalisation, ladite composition (2) est dépourvue de polyoléfine et comprend en poids :

- 96% à 100% d'au moins un polyamide en C4 à C9 tel que défini ci-dessus;
- 0 à 2% d'au moins plastifiant ;
- 0 à 2% d'au moins un additif

le total étant de 100% en poids.

Avantageusement, ladite composition (2) est dépourvue de plastifiant et ladite composition (2) comprend en poids :

- 86% à 100% d'au moins un polyamide en C4 à C9 tel que défini ci-dessus, notamment de 92 à 100% en poids;
- 0 à 12% d'au moins une polyoléfine, notamment de 0 à 6% d'au moins une polyoléfine ;
- 0 à 2% d'au moins un additif,

le total étant de 100% en poids.

Il est bien évident que les différentes compositions (2) comprenant ou non au moins une polyoléfine et/ou au moins un plastifiant et/ou au moins un additif se réfèrent à tous les modes de réalisation ci-dessus décrits pour la composition (2).

Dans un mode de réalisation, ledit au moins un polyamide de la couche (2) de la structure tubulaire ci-dessus définie est choisi parmi le PA6, PA66, PA6/66, PA610, PA410, PA412 et PA612.

**S'agissant de la couche optionnelle (3) et de la composition (3)**

Une couche interne (3) peut être présente dans la structure tubulaire ci-dessus définie.

Dans un mode de réalisation, la dite couche (3) est présente et ladite couche (3) est interne et en contact avec ledit fluide transporté.

La couche (3) comprend une composition (3) telle que définie pour la composition (1) ci-dessus ou telle que définie pour la composition (2) ci-dessus ou une composition (3') comprenant majoritairement un polyamide à chaîne courte présentant de 4 à 7 atomes de carbone par atome d'azote et au moins 20%, préférentiellement au moins 25% en poids d'au moins une polyoléfine par rapport au poids total de ladite composition (3'), ou une composition (4) comprenant au moins 50% de motifs aromatiques.

Le terme polyamide à courte chaîne de la composition (3') désigne de la même manière aussi bien un homopolyamide qu'un copolyamide.

L'homopolyamide peut être obtenu à partir de la polycondensation de motifs lactames, de motifs aminoacides ou de motifs XY, X étant une diamine et Y un acide dicarboxylique (ou diacide), à partir du moment où l'homopolyamide présente de 4 à 7 atomes de carbone par atome d'azote.

La diamine peut être aliphatique linéaire ou ramifiée, ou cycloaliphatique, préférentiellement elle est aliphatique linéaire ou ramifiée, notamment linéaire.

L'acide dicarboxylique peut être aliphatique ou cycloaliphatique, préférentiellement il est aliphatique.

Par conséquent, les lactames et les aminoacides utilisés pour obtenir les homopolyamides doivent présenter un nombre moyen d'atomes de carbone (C) par atome d'azote (N) compris de 4 à 7.

Avantageusement, les lactames et les aminoacides sont en C6.

Dans le cas des homopolyamides obtenus à partir de la polycondensation de motifs XY, le nombre d'atome par atome d'azote se calcule par la moyenne des nombres d'atomes de carbone présents dans le motif issu de la diamine X et dans le motif issu du diacide Y.

Par conséquent, la diamine (X) peut être en C4 à C10, notamment C4 à C7, en particulier en C4 à C6 et l'acide dicarboxylique (Y) en C4 à C10, notamment en C4 à C7, en particulier en C4 à C6, à partir du moment où la moyenne des nombres d'atomes de carbone présents dans le motif issu de la diamine X et dans le motif issu du diacide Y est comprise de 4 à 7.

Avantageusement, la diamine est choisie parmi la butanediamine, la pentanediamine, 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, notamment la 2-méthyl-1,5-pentanediamine et la 1,6-hexaméthylènediamine.

Avantageusement, le diacide carboxylique est choisi parmi l'acide succinique, l'acide pentanedioïque, l'acide adipique, l'acide subérique, l'acide azélaïque, l'acide sébacique.

Avantageusement, la diamine est choisie parmi la 2-méthyl-1,5-pentanediamine, la 1,6-hexaméthylènediamine la 1,7-heptanediamine, la 1,8-octanediamine, la 1,9-nonanediamine, la 2-méthyl-1,8-octane-diamine, la 2,2,4-triméthylhexaméthylènediamine, la 2,4,4-triméthylhexaméthylènediamine, la 1,10-décanediamine, 1,11-undécanediamine, la 2-butyl-2-éthyl-1,5-pentanediamine, la 1,12-dodécanediamine, la 1,13-tridécanediamine, la 1,14-tétradécanediamine et le diacide carboxylique est choisi parmi l'acide adipique, l'acide subérique, l'acide azélaïque, l'acide sébacique, l'acide undécanedioïque, notamment l'acide sébacique.

Avantageusement, ladite couche (3) est dépourvue de fibres continues.

Avantageusement, ladite couche (1) et la dite couche (3) sont dépourvues de fibres.

Le terme « fibres » est tel que défini ci-dessus.

La dite composition (3') de la couche (3) comprend au moins 20% en poids, préférentiellement au moins 25% en poids d'au moins une polyoléfine.

La polyoléfine est telle que définie pour la composition (1).

Ladite composition (3') peut également comprendre au moins un plastifiant et/ou au moins un additif.

Le plastifiant et l'additif sont tels que définis ci-dessus.

Dans un mode de réalisation, ladite composition (3') comprend en poids :

- 54% à 80% d'au moins un polyamide à courte chaîne en C4 à C9 tel que défini ci-dessus, notamment 54% à 75%;
- 20 à 40%, préférentiellement 25 à 40% d'au moins une polyoléfine ;
- 0 à 4% d'au moins plastifiant ;
- 0 à 2% d'au moins un additif

le total étant de 100% en poids.

Le polyamide de la composition (4) comprenant au moins 50% de motifs semi aromatiques peut être un polyphtalamide, notamment lePA11/10T, le motif 10T représentant alors 50% en poids du poids total du copolyamide.

Dans un mode de réalisation, la couche interne (3) lorsqu'elle est présente est dépourvue de polyamide de la composition (4) comprenant au moins 50% de motifs semi aromatiques.

**Structure tubulaire :**

La structure tubulaire peut comprendre au moins une couche (1), au moins une couche (2) et optionnellement une couche interne (3).

Dans le cas où la structure tubulaire est dépourvue de couche (3), la couche (2) est alors en contact avec le fluide de transporté.

La structure tubulaire comprend donc au moins une couche (1) et au moins une couche (2). La structure tubulaire de l'invention peut donc comprendre plusieurs couches (2).

Quelle que soit le nombre de couches présentes dans la structure tubulaire, ladite couche (2) ou l'ensemble desdites couches (2) représente(nt) au moins 50% de l'épaisseur du tube.

Quelle que soit le nombre de couches présentes dans la structure tubulaire, ladite couche (2) ou l'ensemble desdites couches (2) représente(nt) au moins 60% de l'épaisseur du tube.

Quelle que soit le nombre de couches présentes dans la structure tubulaire, ladite couche (2) ou l'ensemble desdites couches (2) représente(nt) au moins 70% de l'épaisseur du tube, en particulier 70% à 95% de l'épaisseur du tube.

L'adhésion entre les couches adjacentes, si nécessaire, est assurée par une couche de liant.

Avantageusement, la structure tubulaire est dépourvue de couche de liant.

Dans le cas où la couche (3) est présente, ladite couche (3) peut être la couche en contact avec le fluide de transporté et la structure tubulaire comprend au moins trois couches.

Avantageusement, ladite couche (3) est la couche en contact avec le fluide de transporté.

Avantageusement, ladite la couche (1) et ladite composition (2) sont dépourvues de plastifiant.

Avantageusement, toutes les couches présentes dans la structure tubulaire sont dépourvues de plastifiant.

Dans un mode de réalisation, ladite couche interne (3) est présente dans la structure la structure tubulaire multicouche ci-dessus définie, ladite composition (3) étant identique à la composition (1).

Avantageusement, ledit au moins un polyamide de la couche (3) de la structure tubulaire ci-dessus définie lorsqu'elle est présente est choisi parmi le PA11, le PA12, le PA11/10T, le PA6, le PA66, le PA6/66, le PA610, PA410, PA412 et le PA612.

Avantageusement, ladite couche 3 est dépourvue de motifs aromatiques.

Plus préférentiellement, ledit au moins un polyamide de la couche (3) lorsqu'elle est présente est choisi parmi le PA11, le PA12, le PA6, le PA66, le PA6/66, le PA610, PA410, PA412 et le PA612.

Avantageusement, ledit au moins un polyamide présentant de 4 à 9 atomes de carbone par atome d'azote de ladite composition (2) de ladite structure tubulaire multicouche comprend au moins 60% de motifs aliphatiques par rapport à la somme des motifs présents dans ledit polyamide et ledit polyamide à longue chaine de ladite composition (1) comprend au moins 60% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 60% de motifs aliphatiques par rapport à la somme des motifs présents dans ledit polyamide et ledit polyamide à longue chaine de ladite composition (1) comprend au moins 70% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 60% de motifs aliphatiques par rapport à la somme des motifs présents dans ledit polyamide et ledit polyamide à longue chaine de ladite composition (1) comprend au moins 80% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 60% de motifs aliphatiques par rapport à la somme des motifs présents dans ledit polyamide et ledit polyamide à longue chaine de ladite composition (1) comprend au moins 90% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 60% de motifs aliphatiques par rapport à la somme des motifs présents dans ledit polyamide et ledit polyamide à longue chaine de ladite composition (1) comprend 100% de motifs aliphatiques par rapport à la somme des motifs présents dans ledit polyamide à longue chaine.

Ladite composition (1) comprend 100% de motifs aliphatiques signifie donc que ladite composition est constituée de 100% de motifs aliphatiques.

Avantageusement, ledit au moins un polyamide présentant de 4 à 9 atomes de carbone par atome d'azote de ladite composition (2) de ladite structure tubulaire multicouche comprend au moins 70% de motifs aliphatiques par rapport à la somme des motifs présents dans ledit polyamide et ledit polyamide à longue chaine de ladite composition (1) comprend au moins 60% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 70% de motifs aliphatiques par rapport à la somme des motifs présents dans ledit polyamide et ledit polyamide à longue chaine de ladite composition (1) comprend au moins 70% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 70% de motifs aliphatiques par rapport à la somme des motifs présents dans ledit polyamide et ledit polyamide à longue chaine de ladite composition (1) comprend au moins 80% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 70% de motifs aliphatiques par rapport à la somme des motifs présents dans ledit polyamide et ledit polyamide à longue chaine de ladite composition (1) comprend au moins 90% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 70% de motifs aliphatiques par rapport à la somme des motifs présents dans ledit polyamide et ledit polyamide à longue chaine de ladite composition (1) comprend 100% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 80% de motifs aliphatiques par rapport à la somme des motifs présents dans ledit polyamide et ledit polyamide à longue chaine de ladite composition (1) comprend au moins 60% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 80% de motifs aliphatiques par rapport à la somme des motifs présents dans ledit polyamide et ledit polyamide à longue chaine de ladite composition (1) comprend au moins 70% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 80% de motifs aliphatiques par rapport à la somme des motifs présents dans ledit polyamide et ledit polyamide à longue chaine de ladite composition (1) comprend au moins 80% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 80% de motifs aliphatiques par rapport à la somme des motifs présents dans ledit polyamide et ledit polyamide à longue chaine de ladite composition (1) comprend au moins 90% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 80% de motifs aliphatiques par rapport à la somme des motifs présents dans ledit polyamide et ledit polyamide à longue chaine de ladite composition (1) comprend 100% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 90% de motifs aliphatiques par rapport à la somme des motifs présents dans ledit polyamide et ledit polyamide à longue chaine de ladite composition (1) comprend au moins 60% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 90% de motifs aliphatiques par rapport à la somme des motifs présents dans ledit polyamide et ledit polyamide à longue chaine de ladite composition (1) comprend au moins 70% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 90% de motifs aliphatiques par rapport à la somme des motifs présents dans ledit polyamide et ledit polyamide à longue chaine de ladite composition (1) comprend au moins 80% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 90% de motifs aliphatiques par rapport à la somme des motifs présents dans ledit polyamide et ledit polyamide à longue chaine de ladite composition (1) comprend au moins 90% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend au moins 90% de motifs aliphatiques par rapport à la somme des motifs présents dans ledit polyamide et ledit polyamide à longue chaine de ladite composition (1) comprend 100% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend 100% de motifs aliphatiques par rapport à la somme des motifs présents dans ledit polyamide et ledit polyamide à longue chaine de ladite composition (1) comprend au moins 60% de motifs aliphatiques par rapport à la somme des motifs présents dans ledit polyamide à longue chaine.

Ladite composition (2) comprend 100% de motifs aliphatiques signifie donc que ladite composition est constituée de 100% de motifs aliphatiques.

Avantageusement, ledit au moins un polyamide présentant de 4 à 9 atomes de carbone par atome d'azote de ladite composition (2) de ladite structure tubulaire multicouche comprend 100% de motifs aliphatiques par rapport à la somme des motifs présents dans ledit polyamide et ledit polyamide à longue chaine de ladite composition (1) comprend au moins 70% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend 100% de motifs aliphatiques par rapport à la somme des motifs présents dans ledit polyamide et ledit polyamide à longue chaine de ladite composition (1) comprend au moins 80% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend 100% de motifs aliphatiques par rapport à la somme des motifs présents dans ledit polyamide et ledit polyamide à longue chaine de ladite composition (1) comprend au moins 90% de motifs aliphatiques par rapport à la somme des motifs présents dans ledit polyamide à longue chaine.

Avantageusement, ledit au moins un polyamide présentant de 4 à 9 atomes de carbone par atome d'azote de ladite composition (2) de ladite structure tubulaire multicouche comprend 100% de motifs aliphatiques par rapport à la somme des motifs présents dans ledit polyamide et ledit polyamide à longue chaine de ladite composition (1) comprend 100% de motifs aliphatiques par rapport à la somme des motifs présents dans ledit polyamide à longue chaine.

Dans un mode de réalisation, ladite composition (2) de la structure tubulaire ci-dessus définie est dépourvue de polyamide(s) autre(s) qu'aliphatique(s).

Dans un autre mode de réalisation, ladite composition (2) et la dite composition (1) de la structure tubulaire ci-dessus définie sont dépourvues de polyamide(s) autre(s) qu'aliphatique(s).

Dans une variante de l'invention, la structure tubulaire multicouche ci-dessus définie, caractérisée en ce que deux couches (2) sont présentes et séparées par une couche constituée de copolymère d'alcool vinylique et d'éthylène (EVOH).

Dans ce cas, l'épaisseur des deux couches (2) représente toujours au moins 50%, préférentiellement au moins 60%, préférentiellement au moins 70%, en particulier de 70 à 95% de l'épaisseur totale.

Dans un mode de réalisation, la structure tubulaire multicouche telle que ci-dessus définie est caractérisée en ce que le fluide de transfert de chaleur est un fluide frigorigène choisi parmi les composés hydrocarbures, hydrofluoro-carbures, éthers, hydrofluoroéthers, $CO_2$, $NH_3$, $SO_2$ et fluorooléfines.

Dans un mode de réalisation, le fluide de transfert de chaleur est un fluide frigorigène choisi parmi $CO_2$, les fluoropropènes, les fluoropropanes et les fluoroéthanes ; de préférence parmi le 1,3,3,3-tétrafluoropropène, le 2,3,3,3-tétrafluoropropène, le 1,2,3,3,3-pentafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le difluorométhane, le 1,1-difluoroéthane, le 1,1,1,2,3,3,3-heptafluoropropane, le 1,1,1-trifluoropropane, le 1,1,1,3,3,3-hexafluoropropane, le 1,1,1,3,3-pentafluoropropane, le 1,1,1,3,3-pentafluorobutane, le trifluoroiodométhane et les mélanges comprenant ceux-ci.

Dans un mode de réalisation, le fluide de transfert de chaleur est un fluide frigorigène choisi parmi le 1,3,3,3-tétrafluoropropène (1234ze) et le 2,3,3,3-tétrafluoropropène (1234yf), en particulier le fluide de transfert de chaleur est le 2,3,3,3-tétrafluoropropène (1234yf).

Avantageusement, le fluide frigorigène contient un lubrifiant, de préférence choisi parmi les huiles minérales, les huiles de silicone, les paraffines d'origine naturelle, les naphtènes, les paraffines synthétiques, les alkylbenzènes, les poly-alpha oléfines, les polyalkylène glycols, les polyol esters et/ou les polyvinyléthers ; le lubrifiant étant de manière plus particulièrement préférée un polyalkylène glycol ou un polyol ester.

Selon un autre aspect, la présente invention concerne l'utilisation d'une structure tubulaire multicouche telle que définie ci-dessus, pour le transport d'un fluide de transfert de chaleur.

Selon un autre aspect, la présente invention concerne l'utilisation d'une structure tubulaire multicouche telle que définie ci-dessus, pour satisfaire un test d'extractibles, ledit test consistant notamment à remplir ladite structure tubulaire multicouche MLT de forane et à chauffer l'ensemble à 60°C pendant 96 heures, puis à le vider en le filtrant dans un bécher, puis à laisser le filtrat du bécher s'évaporer à température ambiante pour enfin peser ce résidu dont la proportion doit être inférieure ou égale à environ 6g/m2 de surface interne de tube et la proportion de résidu sur le filtre après filtration étant inférieure ou égale à 1 g/m$^2$, préférentiellement inférieure ou égale à 0,5 g/m$^2$.

En d'autre termes, la présente invention concerne l'utilisation d'une structure tubulaire multicouche telle que définie ci-dessus, pour diminuer la proportion de composé soluble et insoluble relarguée par une structure tubulaire, telle que définie ci-dessus, après mise contact de ladite structure tubulaire multicouche MLT avec du forane, ladite proportion de composé relarguée étant déterminée un test d'extractibles, ledit test consistant notamment à remplir ladite structure tubulaire multicouche MLT de forane et à chauffer l'ensemble à 60°C pendant 96 heures, puis à le vider en le filtrant dans un bécher, puis à laisser le filtrat du bécher s'évaporer à température ambiante pour enfin peser ce résidu dont la proportion doit être inférieure ou égale à environ 6g/m2 de surface interne de tube et la proportion de résidu sur le filtre après filtration étant inférieure ou égale à 1 g/m², préférentiellement inférieure ou égale à 0,5 g/m².

Ladite structure tubulaire permet donc de diminuer la proportion de composé soluble et insoluble après contact avec le forane par rapport aux structures de l'art antérieur.

## EXEMPLES

La présente invention va maintenant être illustrée à l'aide d'exemples sans pour autant être limité à ceux-ci.

Les structures suivantes ont été ont été préparées par extrusion :

Les tubes multicouches sont réalisés par coextrusion. On utilise une ligne industrielle d'extrusion multicouche McNeil, équipée de 5 extrudeuses, connectées à une tête d'extrusion multicouche à mandrins spiralés.

Les vis utilisées sont des monovis d'extrusion ayant des profils de vis adaptés aux polyamides. En plus, des 5 extrudeuses et de la tête d'extrusion multicouche, la ligne d'extrusion comporte :

un ensemble filière-poinçon, situé en bout de tête de coextrusion ; le diamètre intérieur de la filière et le diamètre extérieur du poinçon sont choisis en fonction de la structure à réaliser et des matériaux qui la composent, ainsi que des dimensions du tube et de la vitesse de ligne ;
un bac à vide avec un niveau de dépression réglable. Dans ce bac circule de l'eau maintenue à 20°C en général, dans laquelle est plongé un calibre permettant de conformer le tube dans ses dimensions finales. Le diamètre du calibre est adapté aux dimensions du tube à réaliser, typiquement de 8,5 à 10 mm pour un tube de diamètre externe de 8 mm et d'épaisseur de 1 mm ;
une succession de bacs de refroidissement dans lesquels de l'eau est maintenue vers 20°C, permettant de refroidir le tube le long de parcours de la tête au banc de tirage ;
un mesureur de diamètre ;
un banc de tirage.

La configuration à 5 extrudeuses est utilisée pour réaliser les tubes allant de 2 couches à 5 couches. Dans le cas des structures dont le nombre de couches est inférieur à 5, plusieurs extrudeuses sont alors alimentées avec la même matière.

Dans le cas des structures comportant 6 couches, une extrudeuse supplémentaire est connectée et un mandrin spiralé est ajouté à la tête existante, en vue de réaliser la couche interne, en contact avec le fluide.

Avant les essais, afin d'assurer les meilleures propriétés au tube et une bonne qualité d'extrusion, on vérifie que les matières extrudées aient un taux d'humidité résiduel avant extrusion inférieur à 0.08%. Dans le cas contraire, on procède à une étape supplémentaire de séchage de la matière avant les essais, généralement dans un sécheur sous vide, pendant 1 nuit à 80°C.

Les tubes, qui répondent aux caractéristiques décrites dans la présente demande de brevet, ont été prélevés, après stabilisation des paramètres d'extrusion, les dimensions du tubes visées n'évoluant plus dans le temps. Le diamètre est contrôlé par un mesureur de diamètre laser installé en bout de ligne.

Généralement, la vitesse de ligne est typiquement de 20m/min. Elle varie généralement entre 5 et 100m/min.

La vitesse de vis des extrudeuses dépend de l'épaisseur de la couche et du diamètre de la vis comme cela est connu de l'homme de l'art.

De manière générale, les température des extrudeuses et des outillages (tête et raccord) doivent être réglées de sorte à être suffisamment supérieures à la température de fusion des compositions considérées, de façon à ce qu'elles demeurent à l'état fondu, évitant ainsi qu'elles se solidifient et bloquent la machine.

Les structures tubulaires ont été testées sur différents paramètres présentés sur le Tableau 1.

Tableau 1

|  |  |  | Eclat. à 125°C* | Perm. à l'eau** | Barrière aux fluides clim*** | Tenue au ZnCl2**** |
|---|---|---|---|---|---|---|
| Ex1 | CPA11 / CPA610 / CPA11 | 150/1350/150$\mu$m | **B** | **TB** | **OK** | **OK** |
| Ex2 | CPA11 / CPA610 / CPA6POF | 150/1350/150$\mu$m | **B** | **TB** | **OK** | **OK** |
| Ex3 | CPA11 / CPA610 | 150/1500$\mu$m | **B** | **TB** | **OK** | **OK** |

(suite)

|  |  |  | Eclat. à 125°C* | Perm. à l'eau** | Barrière aux fluides clim*** | Tenue au ZnCl2**** |
|---|---|---|---|---|---|---|
| Ex4 | CPA11 / CPA66 / CPA11 | 150/1350/150µm | TB | AB | OK | OK |
| Ex5 | CPA11 / CPA66 | 150/1500µm | TB | AB | OK | OK |
| Ex6 | CPA11 / CPA610 / CPA66 | 150/750/750µm | TB | B | OK | OK |
| Ex7 | CPA11 / CPA610 / CPA66 / CPA610 / CPA11 | 150/300/750/300/150 | TB | B | OK | OK |
| Ex8 | CPA11 / CPA610 / CPA1110TPOF | 150/1350/150µm | B | TB | OK | OK |
|  |  |  |  |  |  |  |
| Contre-Ex1 | Monocouche CPA66 | 1650µm | TB | Mv | OK | NOK |
| Contre-Ex2 | Monocouche CPA66plast | 1650µm | TB | Mv | NOK | NOK |
| Contre-Ex3 | CPA11 / CPA610POF / CPA11 | 150/1350/150µm | Mv | B | OK | OK |
| Contre Ex4 | CPA11 / CPA610plast / CPA11 | 150/1350/150µm | Mv | B | NOK | OK |
| Contre-Ex5 | CPA11 / CPA66 / CPA11 | 450/750/450µm | Mv | TB | OK | OK |

L'exemple 6 est constitué de gauche à droite d'une couche (1) et deux couches (2). L'exemple 7 est constitué de gauche à droite d'une couche (1), de trois couches (2) successives (épaisseur totale des couches (2) = 1350µm) et d'une couche (3).

Les méthodes de mesures et les valeurs correspondant à la notation sont précisées dans le tableau 2

Tableau 2

|  | Très bien (TB) | Bien (B) | Limite (AB) | Mauvais (Mv) |
|---|---|---|---|---|
| (*) **Eclatement** est la pression d'éclatement en bar d'un tube à 125°C conditionné sous 50% d'eau pendant 15 jours (selon DIN 53758). | >93 | 93 - 83 | 82-80 | < 80 |
| (**) **Perméabilité à l'eau.** Obtenue à partir de mesure WVTR (Water Vapor Transmission) selon ASTM E 96/E 96M - 05 sur film de 25µm d'épaisseur de chaque couche séparément. Condition 70°C, 100% d'humidité relative [g/m$^2$.72h] | <16 | 16-22 | 23-33 | >33 |
|  | OK | | NOK | |
| (***) **Barrière aux fluides de climatisation.** Calculée à partir de valeur de film. [cm$^3$/m$^2$.jour.atm] | <3 | | >3 | |

(suite)

|  | Très bien (TB) | Bien (B) | Limite (AB) | Mauvais (Mv) |
|---|---|---|---|---|
| (****) **Tenue au ZnCl2.** Temps de rupture après introduction de la solution de ZnCl2 sur une section de tube (largeur de la section 5mm +/- 0,2mm et tube de 8mm*1mm) déformée à 30% (avec maintien de la contrainte). Analyse de la couche externe des structures. | 200 H | | < 1H | |
| (***) Les mesures de flux ont été réalisées sur des films de même composition que les couches des structures tubulaires avec une cellule de perméation, par un couplage Lyssy GPM500/GC à une température de 23°C et 0 % d'humidité relative. La face supérieure de la cellule est balayée par le gaz d'essai, et le flux diffusant à travers le film dans la partie inférieure est mesuré par chromatographie en phase gazeuse. On utilise de l'hélium en tant que gaz vecteur balayant la partie inférieure. | | | | |

La perméation des structures tubulaires est calculée par la loi usuelle de perméation d'un multicouche, à savoir :

$$e/P = \sum ei/Pi$$

e et P sont l'épaisseur et la perméabilité de la structure multicouche

ei et Pi sont les épaisseurs et les perméabilités de chacune des couches de la structure

**Compositions**

CPA11 : désigne une composition à base de polyamide 11 de Mn (masse moléculaire en nombre) 29000, contenant 20% de modifiant choc type éthylène/acrylate d'éthyle/anhydride en rapport massique 68,5/30/1,5 (MFI 6 à 190°C sous 2.16 kg), et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 190°C.

CPA610 : désigne une composition à base de polyamide 610 de Mn (masse moléculaire en nombre) 30000, contenant 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 223°C.

CPA66 : désigne une composition à base de polyamide 66 de Mn (masse moléculaire en nombre) 32000, contenant 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 264°C.

CPA6POF : désigne une composition à base de polyamide 6 de Mn (masse moléculaire en nombre) 18000, contenant 40% de POF et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 220°C.

POF : est une composition à base de 50% de modifiant choc type éthylène/acrylate d'éthyle/anhydride maléique en rapport massique 68,5/30/1,5 (MFI 6 à 190°C sous 2.16 kg), de 25% de modifiant choc type éthylène/acrylate de méthyle/époxyde (type GMA), méthacrylate de glycidyle en rapport massique 67/25/8 de MFI 6 à 190°C sous 2.16kg, et de 25% de modifiant choc type éthylène/acrylate de méthyle/anhydride maléique, en rapport massique 76/18/6 de MFI 8 à 190°C sous 2.16kg

CPA1110TPOF : désigne une composition à base de copolyamide 10.T/11 en proportion massique 68/32, de Mn (masse moléculaire en nombre) 20000, contenant 30% de POF et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 255°C. POF est une composition à base de 50% de modifiant choc type éthylène/acrylate d'éthyle/anhydride maléique en rapport massique 68,5/30/1,5 (MFI 6 à 190°C sous 2.16 kg), de 25% de modifiant choc type éthylène/acrylate de méthyle/époxyde (type GMA), méthacrylate de glycidyle en rapport massique 67/25/8 de MFI 6 à 190°C sous 2.16kg, et de 25% de modifiant choc type éthylène/acrylate de méthyle/anhydride maléique, en rapport massique 76/18/6 de MFI 8 à 190°C sous 2.16kg

CPA610POF : désigne une composition à base de polyamide 610 de Mn (masse moléculaire en nombre) 32000, contenant 20% de POF et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 223°C.

CPA66plast : désigne une composition à base de polyamide 66 de Mn (masse moléculaire en nombre) 30000, contenant 6% de plastifiant BBSA (benzene butyl sulfonamide), et 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 260°C.

CPA610plast : désigne une composition à base de polyamide 66 de Mn (masse moléculaire en nombre) 32000, contenant 6% de plastifiant BBSA (benzene butyl sulfonamide), et 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 219°C.

## Revendications

1. Structure tubulaire multicouche (MLT) destinée au transport d'un fluide de transfert de chaleur, ladite structure tubulaire multicouche comprenant :

   au moins une couche (1) comprenant une composition (1) comprenant majoritairement au moins un polyamide à longue chaine présentant de 10 à 15 atomes de carbone par atome d'azote et comprenant au moins 50% de motifs aliphatiques par rapport à la somme des motifs présents dans ledit polyamide à longue chaine,
   au moins une couche (2) située au-dessous de la dite couche (1) comprenant une composition (2) comprenant majoritairement au moins un polyamide présentant de 4 à 9 atomes de carbone par atome d'azote, ledit polyamide comprenant au moins 50% de motifs aliphatiques par rapport à la somme des motifs présents dans ledit polyamide, ladite composition (2) comprenant jusqu'à 12% de polyoléfines, notamment jusqu'à 6% en poids de polyoléfine, par rapport au poids total de ladite composition (2), et jusqu'à 2% en poids d'au moins un plastifiant par rapport au poids total de ladite composition (2),
   optionnellement une couche (3) comprenant une composition (3) telle que définie pour la composition (1), ou comprenant une composition (3') comprenant majoritairement un polyamide à chaîne courte présentant de 4 à 7 atomes de carbone par atome d'azote et au moins 20%, préférentiellement au moins 25% en poids d'au moins une polyoléfine par rapport au poids total de ladite composition (3'), ou une composition (4) comprenant un polyamide comprenant au moins 50% de motifs semi aromatiques, ladite couche (1) étant dépourvue de fibres continues,
   ladite couche (2) étant en contact avec ledit fluide transporté lorsque ladite couche (3) n'est pas présente, et ladite ou lesdites couche(s) (2) représentant au moins 50% de l'épaisseur totale du tube.

2. Structure tubulaire multicouche selon la revendication 1, **caractérisée en ce que** la dite couche (3) est présente, ladite couche (3) étant interne et en contact avec ledit fluide transporté.

3. Structure tubulaire multicouche selon la revendication 1 ou 2, **caractérisée en ce que** ladite couche (1) est la couche la plus extérieure de ladite structure tubulaire multicouche.

4. Structure tubulaire multicouche selon l'une des revendications 1 à 3, **caractérisée en ce que** ladite composition (1) comprend jusqu'à 40% d'au moins une polyoléfine.

5. Structure tubulaire multicouche selon l'une des revendications 1 à 4, **caractérisée en ce que** ladite composition (1) comprend au moins 3% en poids d'au moins une polyoléfine, en particulier au moins 6% en poids d'au moins une polyoléfine, notamment de 10 à 12% en poids d'au moins une polyoléfine, par rapport au poids total de ladite composition (1).

6. Structure tubulaire multicouche selon l'une des revendications 1 à 5, ladite composition (1) comprenant jusqu'à 4% en poids d'au moins un plastifiant par rapport au poids de la dite composition (1).

7. Structure tubulaire multicouche selon l'une des revendications 1 à 6, **caractérisée en ce que** la couche (1) est dépourvue de plastifiant.

8. Structure tubulaire multicouche selon l'une des revendications 1 à 7, **caractérisée en ce que** ladite couche (2) est dépourvue de plastifiant.

9. Structure tubulaire multicouche selon l'une des revendications 1 à 8, **caractérisée en ce que** la dite couche (2) et ladite couche (1) sont dépourvues de plastifiant.

10. Structure tubulaire multicouche selon l'une des revendications 1 à 9, **caractérisée en ce que** toutes les couches présentes dans ladite structure sont dépourvues de plastifiant.

11. Structure tubulaire multicouche selon l'une des revendications 1 à 10, **caractérisée en ce que** ladite composition (2) comprend jusqu'à 6% en poids de polyoléfine, par rapport au poids total de ladite composition (2).

12. Structure tubulaire multicouche selon l'une des revendications 1 à 11, **caractérisée en ce que** ladite composition (2) est dépourvue de polyoléfine.

13. Structure tubulaire multicouche selon l'une des revendications 1 à 12, **caractérisée en ce que** ledit polyamide de ladite composition (2) comprend au moins 60% de motifs aliphatiques par rapport à la somme des motifs présents dans ledit polyamide.

14. Structure tubulaire multicouche selon l'une des revendications 1 à 13, **caractérisée en ce que** ledit polyamide de ladite composition (2) comprend au moins 60% de motifs aliphatiques par rapport à la somme des motifs présents dans ledit polyamide et ledit polyamide à longue chaine de ladite composition (1) comprend au moins 60% de motifs aliphatiques par rapport à la somme des motifs présents dans ledit polyamide à longue chaine.

15. Structure tubulaire multicouche selon l'une des revendications 1 à 14, **caractérisée en ce que** ledit polyamide de ladite composition (1) est constitué de motifs aliphatiques.

16. Structure tubulaire multicouche selon l'une des revendications 1 à 14, **caractérisée en ce que** ledit polyamide de ladite composition (2) est constitué de motifs aliphatiques.

17. Structure tubulaire multicouche selon l'une des revendications 1 à 14, **caractérisée en ce que** ledit polyamide de ladite composition (2) est constitué de motifs aliphatiques et ledit polyamide à longue chaine de ladite composition (1) est constitué de motifs aliphatiques.

18. Structure tubulaire multicouche selon l'une des revendications 1 à 17, **caractérisée en ce que** ladite composition (2) est dépourvue de polyamide(s) autre(s) qu'aliphatique(s).

19. Structure tubulaire multicouche selon l'une des revendications 1 à 18, **caractérisée en ce que** ladite composition (2) et la dite composition (1) sont dépourvues de polyamide(s) autre(s) qu'aliphatique(s).

20. Structure tubulaire multicouche selon l'une des revendications 1 à 19, **caractérisée en ce que** ladite couche (2) représente au moins 70% de l'épaisseur totale du tube.

21. Structure tubulaire multicouche selon l'une des revendications 1 à 20, **caractérisée en ce que** deux couches (2) sont présentes et séparées par une couche constituée de copolymère d'alcool vinylique et d'éthylène (EVOH).

22. Structure tubulaire multicouche selon l'une des revendications 2 à 21, **caractérisée en ce que** ladite couche interne (3) est présente, ladite composition (3) étant identique à la composition (1).

23. Structure tubulaire multicouche selon l'une des revendications 1 à 22, **caractérisée en ce que** le fluide de transfert de chaleur est un fluide frigorigène choisi parmi les composés hydrocarbures, hydrofluorocarbures, éthers, hydro-fluoroéthers, $CO_2$, $NH_3$, $SO_2$ et fluorooléfines.

24. Structure tubulaire multicouche selon la revendication 23, **caractérisée en ce que** le fluide de transfert de chaleur est un fluide frigorigène choisi parmi $CO_2$, les fluoropropènes, les fluoropropanes et les fluoroéthanes ; de préférence parmi le 1,3,3,3-tétrafluoropropène, le 2,3,3,3-tétrafluoropropène, le 1,2,3,3,3-pentafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le difluorométhane, le 1,1-difluoroéthane, le 1,1,1,2,3,3,3-heptafluoropropane, le 1,1,1-trifluoropropane, le 1,1,1,3,3,3-hexafluoropropane, le 1,1,1,3,3-pentafluoropropane, le 1,1,1,3,3-pentafluorobutane, le trifluoroiodométhane et les mélanges comprenant ceux-ci.

25. Structure tubulaire multicouche selon l'une des revendications 23 ou 24, **caractérisée en ce que** le fluide de transfert de chaleur est un fluide frigorigène choisi parmi le 1,3,3,3-tétrafluoropropène (1234ze) et le 2,3,3,3-tétrafluoropropène (1234yf), en particulier le fluide de transfert de chaleur est le 2,3,3,3-tétrafluoropropène (1234yf).

26. Structure tubulaire multicouche selon l'une des revendications 23 à 25, **caractérisée en ce que** le fluide frigorigène contient un lubrifiant, de préférence choisi parmi les huiles minérales, les huiles de silicone, les paraffines d'origine naturelle, les naphtènes, les paraffines synthétiques, les alkylbenzènes, les poly-alpha oléfines, les polyalkylène glycols, les polyol esters et/ou les polyvinyléthers ; le lubrifiant étant de manière plus particulièrement préférée un polyalkylène glycol ou un polyol ester.

27. Structure tubulaire multicouche selon l'une des revendications 1 à 26, **caractérisée en ce que** ledit au moins un polyamide de la couche (1) est choisi parmi le PA11, le PA12, le PA1010 et le PA1012.

28. Structure tubulaire multicouche selon l'une des revendications 1 à 27, **caractérisée en ce que** ledit au moins un polyamide de la couche (2) est choisi parmi le PA6, le PA66, le PA6/66, le PA610, le PA410, le PA412 et le PA612.

29. Structure tubulaire multicouche selon l'une des revendications 1 à 28, **caractérisée en ce que** ledit au moins un polyamide de la couche (3) lorsqu'elle est présente est choisi parmi le PA11, le PA12, le PA11/10T, le PA6, le PA66, le PA6/66, le PA610, le PA410, le PA412 et le PA612,

30. Utilisation d'une structure tubulaire multicouche telle que définie dans l'une des revendications 1 à 29, pour le transport d'un fluide de transfert de chaleur.

31. Utilisation d'une structure tubulaire multicouche selon l'une des revendications 1 à 29, pour satisfaire un test d'extractibles, ledit test consistant notamment à remplir ladite structure tubulaire multicouche MLT de forane et à chauffer l'ensemble à 60°C pendant 96 heures, puis à le vider en le filtrant dans un bécher, puis à laisser le filtrat du bécher s'évaporer à température ambiante pour enfin peser ce résidu dont la proportion doit être inférieure ou égale à environ 6g/m2 de surface interne de tube et la proportion de résidu sur le filtre après filtration étant inférieure ou égale à 1 g/m$^2$, préférentiellement inférieure ou égale à 0,5 g/m$^2$.

**Patentansprüche**

1. Mehrschichtige röhrenförmige Struktur (MLT), bestimmt zum Transport eines Wärmeübertragungsfluids, wobei die mehrschichtige röhrenförmige Struktur umfasst:

   mindestens eine Schicht (1), umfassend eine Zusammensetzung (1), umfassend überwiegend mindestens ein langkettiges Polyamid mit 10 bis 15 Kohlenstoffatomen pro Stickstoffatom und umfassend zu mindestens 50 % aliphatische Einheiten, bezogen auf die Summe der in dem langkettigen Polyamid vorhandenen Einheiten, mindestens eine Schicht (2) unterhalb der Schicht (1), umfassend eine Zusammensetzung (2), umfassend überwiegend mindestens ein Polyamid mit 4 bis 9 Kohlenstoffatomen pro Stickstoffatom, wobei das Polyamid bezogen auf die Summe der in dem Polyamid vorhandenen Einheiten zu mindestens 50 % aliphatische Einheiten umfasst, wobei die Zusammensetzung (2) bezogen auf das Gesamtgewicht der Zusammensetzung (2) bis zu 12 Gew.-% Polyolefine, insbesondere bis zu 6 Gew.-% Polyolefin, , und bezogen auf das Gesamtgewicht der Zusammensetzung (2) bis zu 2 Gew.-% mindestens einen Weichmacher umfasst, wahlweise eine Schicht (3), umfassend eine Zusammensetzung (3), wie für die Zusammensetzung (1) definiert, oder umfassend eine Zusammensetzung (3'), umfassend überwiegend ein kurzkettiges Polyamid mit 4 bis 7 Kohlenstoffatomen pro Stickstoffatom und mindestens 20 Gew.-%, vorzugsweise zu mindestens 25 Gew.-%, mindestens ein Polyolefin, bezogen auf das Gesamtgewicht der Zusammensetzung (3'), oder eine Zusammensetzung (4), umfassend ein Polyamid, umfassend zu mindestens 50 % halbaromatische Einheiten, wobei die Schicht (1) frei von Endlosfasern ist, wobei die Schicht (2) mit dem transportierten Fluid in Kontakt ist, wenn die Schicht (3) nicht vorhanden ist, und wobei die Schicht(en) (2) mindestens 50 % der Gesamtdicke der Röhre ausmachen.

2. Mehrschichtige röhrenförmige Struktur nach Anspruch 1, **dadurch gekennzeichnet, dass** die Schicht (3) vorhanden ist, wobei die Schicht (3) innen und mit dem transportierten Fluid in Kontakt ist.

3. Mehrschichtige röhrenförmige Struktur nach Anspruch 1 oder 2, **dadurch gekennzeichnet, dass** die Schicht (1) die äußerste Schicht der mehrschichtigen röhrenförmigen Struktur ist.

4. Mehrschichtige röhrenförmige Struktur nach einem der Ansprüche 1 bis 3, **dadurch gekennzeichnet, dass** die Zusammensetzung (1) bis zu 40 % mindestens ein Polyolefin umfasst.

5. Mehrschichtige röhrenförmige Struktur nach einem der Ansprüche 1 bis 4, **dadurch gekennzeichnet, dass** die Zusammensetzung (1) bezogen auf das Gesamtgewicht der Zusammensetzung (1) zu mindestens 3 Gew.-% mindestens ein Polyolefin, im Besonderen zu mindestens 6 Gew.-% mindestens ein Polyolefin, insbesondere zu 10 bis 12 Gew.-% mindestens ein Polyolefin umfasst.

6. Mehrschichtige röhrenförmige Struktur nach einem der Ansprüche 1 bis 5, wobei die Zusammensetzung (1) bezogen auf das Gewicht der Zusammensetzung (1) bis zu 4 Gew.-% mindestens einen Weichmacher umfasst.

7. Mehrschichtige röhrenförmige Struktur nach einem der Ansprüche 1 bis 6, **dadurch gekennzeichnet, dass** die Schicht (1) frei von Weichmacher ist.

8. Mehrschichtige röhrenförmige Struktur nach einem der Ansprüche 1 bis 7, **dadurch gekennzeichnet, dass** die Schicht (2) frei von Weichmacher ist.

9. Mehrschichtige röhrenförmige Struktur nach einem der Ansprüche 1 bis 8, **dadurch gekennzeichnet, dass** die Schicht (2) und die Schicht (1) frei von Weichmacher sind.

10. Mehrschichtige röhrenförmige Struktur nach einem der Ansprüche 1 bis 9, **dadurch gekennzeichnet, dass** alle in der Struktur vorhandenen Schichten frei von Weichmacher sind.

11. Mehrschichtige röhrenförmige Struktur nach einem der Ansprüche 1 bis 10, **dadurch gekennzeichnet, dass** die Zusammensetzung (2) bezogen auf das Gesamtgewicht der Zusammensetzung (2) bis zu 6 Gew.-% Polyolefin umfasst.

12. Mehrschichtige röhrenförmige Struktur nach einem der Ansprüche 1 bis 11, **dadurch gekennzeichnet, dass** die Zusammensetzung (2) frei von Polyolefin ist.

13. Mehrschichtige röhrenförmige Struktur nach einem der Ansprüche 1 bis 12, **dadurch gekennzeichnet, dass** das Polyamid der Zusammensetzung (2) bezogen auf die Summe der in dem Polyamid vorhandenen Einheiten zu mindestens 60 % aliphatische Einheiten umfasst.

14. Mehrschichtige röhrenförmige Struktur nach einem der Ansprüche 1 bis 13, **dadurch gekennzeichnet, dass** das Polyamid der Zusammensetzung (2) bezogen auf die Summe der in dem Polyamid vorhandenen Einheiten zu mindestens 60 % aliphatische Einheiten umfasst und das langkettige Polyamid der Zusammensetzung (1) bezogen auf die Summe der in dem langkettigen Polyamid vorhandenen Einheiten zu mindestens 60 % aliphatische Einheiten umfasst.

15. Mehrschichtige röhrenförmige Struktur nach einem der Ansprüche 1 bis 14, **dadurch gekennzeichnet, dass** das Polyamid der Zusammensetzung (1) aus aliphatischen Einheiten besteht.

16. Mehrschichtige röhrenförmige Struktur nach einem der Ansprüche 1 bis 14, **dadurch gekennzeichnet, dass** das Polyamid der Zusammensetzung (2) aus aliphatischen Einheiten besteht.

17. Mehrschichtige röhrenförmige Struktur nach einem der Ansprüche 1 bis 14, **dadurch gekennzeichnet, dass** das Polyamid der Zusammensetzung (2) aus aliphatischen Einheiten besteht und das langkettige Polyamid der Zusammensetzung (1) aus aliphatischen Einheiten besteht.

18. Mehrschichtige röhrenförmige Struktur nach einem der Ansprüche 1 bis 17, **dadurch gekennzeichnet, dass** die Zusammensetzung (2) frei von Polyamid(en), aliphatische ausgenommen, ist.

**19.** Mehrschichtige röhrenförmige Struktur nach einem der Ansprüche 1 bis 18, **dadurch gekennzeichnet, dass** die Zusammensetzung (2) und die Zusammensetzung (1) frei von Polyamid(en), aliphatische ausgenommen, sind.

**20.** Mehrschichtige röhrenförmige Struktur nach einem der Ansprüche 1 bis 19, **dadurch gekennzeichnet, dass** die Schicht (2) mindestens 70 % der Gesamtdicke der Röhre ausmacht.

**21.** Mehrschichtige röhrenförmige Struktur nach einem der Ansprüche 1 bis 20, **dadurch gekennzeichnet, dass** zwei Schichten (2) vorhanden und durch eine Schicht getrennt sind, die aus Ethylen-Vinylalkohol-Copolymer (EVOH) besteht.

**22.** Mehrschichtige röhrenförmige Struktur nach einem der Ansprüche 2 bis 21, **dadurch gekennzeichnet, dass** die innere Schicht (3) vorhanden ist, wobei die Zusammensetzung (3) mit der Zusammensetzung (1) identisch ist.

**23.** Mehrschichtige röhrenförmige Struktur nach einem der Ansprüche 1 bis 22, **dadurch gekennzeichnet, dass** das Wärmeübertragungsfluid ein Kältemittel ist, ausgewählt aus Verbindungen von Kohlenwasserstoffen, Fluorkohlenwasserstoffen, Ethern, Hydrofluorethern, $CO_2$, $NH_3$, $SO_2$ und Fluorolefinen.

**24.** Mehrschichtige röhrenförmige Struktur nach Anspruch 23, **dadurch gekennzeichnet, dass** das Wärmeübertragungsfluid ein Kältemittel ist, ausgewählt aus $CO_2$, Fluorpropenen, Fluorpropanen und Fluorethanen; vorzugsweise aus 1,3,3,3-Tetrafluorpropen, 2,3,3,3-Tetrafluorpropen, 1,2,3,3,3-Pentafluorpropen, 1,1,3,3-Tetrafluorpropen, 3,3,3-Trifluorpropen, 2,3,3-Trifluorpropen, 1,1,1,2-Tetrafluorethan, 1,1,2,2-Tetrafluorethan, Pentafluorethan, Difluormethan, 1,1-Difluorethan, 1,1,1,2,3,3,3-Heptafluorpropan, 1,1,1-Trifluorpropan, 1,1,1,3,3,3-Hexafluorpropan, 1,1,1,3,3-Pentafluorpropan, 1,1,1,3,3-Pentafluorbutan, Trifluoriodmethan und Mischungen, die diese umfassen.

**25.** Mehrschichtige röhrenförmige Struktur nach einem der Ansprüche 23 oder 24, **dadurch gekennzeichnet, dass** das Wärmeübertragungsfluid ein Kältemittel ist, ausgewählt aus 1,3,3,3-Tetrafluorpropen (1234ze) und 2,3,3,3-Tetrafluorpropen (1234yf), im Besonderen ist das Wärmeübertragungsfluid 2,3,3,3-Tetrafluorpropen (1234yf).

**26.** Mehrschichtige röhrenförmige Struktur nach einem der Ansprüche 23 bis 25, **dadurch gekennzeichnet, dass** das Kältemittel ein Schmiermittel enthält, vorzugsweise ausgewählt aus Mineralölen, Silikonölen, Paraffinen natürlichen Ursprungs, Naphthenen, synthetischen Paraffinen, Alkylbenzolen, Poly-alpha-Olefinen, Polyalkylenglycolen, Polyolestern und/oder Polyvinylethern; wobei das Schmiermittel auf besonders bevorzugte Weise ein Polyalkylenglycol oder ein Polyolester ist.

**27.** Mehrschichtige röhrenförmige Struktur nach einem der Ansprüche 1 bis 26, **dadurch gekennzeichnet, dass** das mindestens eine Polyamid der Schicht (1) ausgewählt ist aus PA11, PA12, PA1010 und PA1012.

**28.** Mehrschichtige röhrenförmige Struktur nach einem der Ansprüche 1 bis 27, **dadurch gekennzeichnet, dass** das mindestens eine Polyamid der Schicht (2) ausgewählt ist aus PA6, PA66, PA6/66, PA610, PA410, PA412 und PA612.

**29.** Mehrschichtige röhrenförmige Struktur nach einem der Ansprüche 1 bis 28, **dadurch gekennzeichnet, dass** das mindestens eine Polyamid der Schicht (3), wenn sie vorhanden ist, ausgewählt ist aus PA11, PA12, PA11/10T, PA6, PA66, PA6/66, PA610, PA410, PA412 und PA612,

**30.** Verwendung einer mehrschichtigen röhrenförmige Struktur wie nach einem der Ansprüche 1 bis 29 definiert, für den Transport eines Wärmeübertragungsfluids.

**31.** Verwendung einer mehrschichtigen röhrenförmigen Struktur nach einem der Ansprüche 1 bis 29, um einer Prüfung auf extrahierbare Stoffe zu genügen, wobei die Prüfung insbesondere darin besteht, die mehrschichtige röhrenförmige Struktur MLT mit Foran zu füllen und das Ensemble während 96 Stunden bei 60 °C zu erwärmen, es anschließend durch Filtrieren in ein Becherglas zu entleeren, anschließend das Filtrat des Becherglases bei Raumtemperatur verdampfen zu lassen, um diesen Rückstand schließlich zu wiegen, dessen Anteil kleiner oder gleich etwa 6 g/m$^2$ der inneren Röhrenoberfläche sein muss und wobei der Anteil des Rückstands auf dem Filter nach dem Filtrieren kleiner oder gleich 1 g/m$^2$, vorzugsweise kleiner oder gleich 0,5 g/m$^2$ ist.

**Claims**

1. A multilayer tubular structure (MLT) intended for transporting a heat-transfer fluid,
   said multilayer tubular structure comprising:

   at least one layer (1) comprising a composition (1) comprising predominantly at least one long-chain polyamide having 10 to 15 carbon atoms per nitrogen atom and comprising at least 50% of aliphatic units relative to the sum of the units present in said long-chain polyamide,
   at least one layer (2) situated underneath said layer (1) comprising a composition (2) comprising predominantly at least one polyamide having 4 to 9 carbon atoms per nitrogen atom, said polyamide comprising at least 50% aliphatic units relative to the sum of the units present in said polyamide, said composition (2) comprising up to 12% polyolefins, in particular up to 6% by weight of polyolefin, relative to the total weight of said composition (2), and up to 2% by weight of at least one plasticizer relative to the total weight of said composition (2),
   optionally, a layer (3) comprising a composition (3) as defined for composition (1), or comprising a composition (3') comprising predominantly a short-chain polyamide with 4 to 7 carbon atoms per nitrogen atom and at least 20%, preferably at least 25% by weight of at least one polyolefin relative to the total weight of said composition (3'), or a composition (4) comprising a polyamide comprising at least 50% semi-aromatic units,
   said layer (1) being devoid of continuous fibers.
   said layer (2) being in contact with said transported fluid when said layer (3) is not present,
   and said layer(s) (2) representing at least 50% of the total thickness of the tube.

2. The multilayer tubular structure according to Claim 1, **characterized in that** said layer (3) is present, said layer (3) being internal and in contact with said transported fluid.

3. The multilayer tubular structure according to Claim 1 or 2, **characterized in that** said layer (1) is the outermost layer of said multilayer tubular structure.

4. The multilayer tubular structure according to one of Claims 1 to 3, **characterized in that** said composition (1) comprises up to 40% of at least one polyolefin.

5. The multilayer tubular structure according to one of Claims 1 to 4, **characterized in that** said composition (1) comprises at least 3% by weight of at least one polyolefin, particularly at least 6% by weight of at least one polyolefin, in particular 10 to 12% by weight of at least one polyolefin, relative to the total weight of said composition (1).

6. The multilayer tubular structure according to one of Claims 1 to 5, said composition (1) comprising up to 4% by weight of at least one plasticizer relative to the weight of said composition (1).

7. The multilayer tubular structure according to one of Claims 1 to 6, **characterized in that** the layer (1) is devoid of plasticizer.

8. The multilayer tubular structure according to one of Claims 1 to 7, **characterized in that** said layer (2) is devoid of plasticizer.

9. The multilayer tubular structure according to one of Claims 1 to 8, **characterized in that** said layer (2) and said layer (1) are devoid of plasticizer.

10. The multilayer tubular structure according to one of Claims 1 to 9, **characterized in that** all the layers present in said structure are devoid of plasticizer.

11. The multilayer tubular structure according to one of Claims 1 to 10, **characterized in that** said composition (2) comprises up to 6% by weight of polyolefin, relative to the total weight of said composition (2).

12. The multilayer tubular structure according to one of Claims 1 to 11, **characterized in that** said composition (2) is devoid of polyolefin.

13. The multilayer tubular structure according to one of Claims 1 to 12, **characterized in that** said polyamide of said composition (2) comprises at least 60% of aliphatic units relative to the sum of the units present in said polyamide.

**14.** The multilayer tubular structure according to one of Claims 1 to 13, **characterized in that** said polyamide of composition (2) comprises at least 60% aliphatic units relative to the sum of the units present in said polyamide and said long-chain polyamide of said composition (1) comprises at least 60% aliphatic units relative to the sum of the units present in said long-chain polyamide.

**15.** The multilayer tubular structure according to one of Claims 1 to 14, **characterized in that** said polyamide of said composition (1) consists of aliphatic units.

**16.** The multilayer tubular structure according to one of Claims 1 to 14, **characterized in that** said polyamide of said composition (2) consists of aliphatic units.

**17.** The multilayer tubular structure according to one of Claims 1 to 14, **characterized in that** said polyamide of said composition (2) consists of aliphatic units and said long-chain polyamide of said composition (1) consists of aliphatic units.

**18.** The multilayer tubular structure according to one of Claims 1 to 17, **characterized in that** said composition (2) is devoid of polyamides other than aliphatic polyamide(s).

**19.** The multilayer tubular structure according to one of Claims 1 to 18, **characterized in that** said composition (2) and said composition (1) are devoid of polyamides other than aliphatic polyamide(s).

**20.** The multilayer tubular structure according to one of Claims 1 to 19, **characterized in that** said layer (2) represents at least 70% of the total thickness of the tube.

**21.** The multilayer tubular structure according to one of Claims 1 to 20, **characterized in that** two layers (2) are present and separated by a layer consisting of ethylene vinyl alcohol (EVOH) copolymer.

**22.** The multilayer tubular structure according to one of Claims 2 to 21, **characterized in that** said internal layer (3) is present, said composition (3) being identical to composition (1).

**23.** The multilayer tubular structure according to one of Claims 1 to 22, **characterized in that** the heat-transfer fluid is a refrigerant fluid selected from hydrocarbon, hydrofluorocarbon, ether, hydrofluoroether, $CO_2$, $NH_3$, $SO_2$ and fluoroolefin compounds.

**24.** The multilayer tubular structure according Claim 23, **characterized in that** the heat-transfer fluid is a refrigerant fluid selected from $CO_2$, fluoropropenes, fluoropropanes and fluoroethanes, preferably from among 1,3,3,3-tetrafluoropropene, 2,3,3,3-tetrafluoropropene, 1,2,3,3,3-pentafluoropropene, 1,1,3,3-tetrafluoropropene, 3,3,3-trifluoropropene, 2,3,3-trifluoropropene, 1,1,1,2-tetrafluoroethane, 1,1,2,2-tetrafluoroethane, pentafluoroethane, difluoromethane, 1,1-difluoroethane, 1,1,1,2,3,3,3-heptafluoropropane, 1,1,1-trifluoropropane, 1,1,1,3,3,3-hexafluoropropane, 1,1,1,3,3-pentafluoropropane, 1,1,1,3,3-pentafluorobutane, trifluoroiodomethane and mixtures thereof.

**25.** The multilayer tubular structure according to one of Claims 23 or 24, **characterized in that** the heat-transfer fluid is a refrigerant fluid selected from 1,3,3,3-tetrafluoropropene (1234ze) and 2,3,3,3-tetrafluoropropene (1234yf), particularly the heat-transfer fluid is 2,3,3,3-tetrafluoropropene (1234yf).

**26.** The multilayer tubular structure according to one of Claims 23 to 25, **characterized in that** the refrigerant fluid contains a lubricant, preferably selected from mineral oils, silicone oils, natural paraffins, naphthenes, synthetic paraffins, alkylbenzenes, polyalphaolefins, polyalkylene glycols, polyol esters and/or polyvinylethers; the lubricant being in a more particularly preferred way a polyalkylene glycol or a polyol ester.

**27.** The multilayer tubular structure according to one of Claims 1 to 26, **characterized in that** said at least one polyamide of layer (1) is selected from PA11, PA12, PA1010 and PA1012.

**28.** The multilayer tubular structure according to one of Claims 1 to 27, **characterized in that** said at least one aliphatic polyamide of layer (2) is selected from PA6, PA66, PA6/66, PA610, PA410, PA412 and PA612.

**29.** The multilayer tubular structure according to one of Claims 1 to 28, **characterized in that** said at least one polyamide of layer (3), when it is present, is selected from PA11, PA12, PA11/10T, PA6, PA66, PA6/66, PA610, PA410, PA412 and PA612.

30. The use of a multilayer tubular structure as defined in one of Claims 1 to 29, for transporting a heat-transfer fluid.

31. The use of a multilayer tubular structure as defined in one of Claims 1 to 29, in order to satisfy an extractable test, said test particularly consisting of filling said multilayer tubular structure MLT with Forane and heating the assembly at 60°C for 96 hours, then emptying it by filtering it into a beaker, then allowing the filtrate from the beaker to evaporate at ambient temperature and finally weighing this residue, the proportion of which must be less than or equal to approximately 6 g/m$^2$ of internal tube surface and the proportion of residue on the filter after filtering being less than or equal to 1 g/m$^2$, preferably less than or equal to 0.5 g/m$^2$.

**EP 3 663 081 B1**

**RÉFÉRENCES CITÉES DANS LA DESCRIPTION**

**Documents brevets cités dans la description**

- EP 2098580 A
- EP 2098365 A
- WO 2014114766 A
- WO 2017121961 A
- WO 2014125219 A
- WO 2017103466 A
- EP 0342066 A